# EUROPÄISCHE PATENTANMELDUNG

(11) **EP 1 006 044 A2**
(43) Veröffentlichungstag der Anmeldung: **07.06.2000**
(21) Anmeldenummer: 99123339.6
(22) Anmeldetag: 23.11.1999
(51) Int. Cl.: B62D 33/06

(54) **Flurförderzeug mit einer Fahrerkabine**

(30) Priorität: 03.12.1998 DE 29821628 U
(71) Anmelder: STILL GMBH, D-22113 Hamburg (DE)
(72) Erfinder: Fuchs, Ivo, Dipl.-Ing., 21516 Schulendorf (DE); Schultz, Matthias, Dipl.-Ing., 19288 Neu-Krenzlin (DE)
(74) Vertreter: Kasseckert, Rainer

(57) **Zusammenfassung**

Gegenstand der Erfindung ist ein Flurförderzeug mit einer Fahrerkabine und einer an der Fahrerkabine (2) befestigten Frontscheibe (1). Erfindungsgemäß weist die Fahrerkabine (2) zwei Führungen (3) auf, wobei zwei gegenüberliegende Kanten der Frontscheibe (1) in den Führungen (3) geführt sind. Die Frontscheibe (1) ist vorteilhafterweise aus Polycarbonat ausgeführt. An der Fahrerkabine (2) ist mindestens ein Befestigungsmittel (4) angeordnet, welches an einer Kante der Frontscheibe (1), die nicht in einer Führung (3) geführt ist, angreift.

## Beschreibung

Die Erfindung betrifft ein Flurförderzeug mit einer Fahrerkabine und einer an der Fahrerkabine befestigten Frontscheibe.

Flurförderzeuge, beispielsweise Gabelstapler, können mit Frontscheiben ausgerüstet werden, wenn der Einsatzort der Flurförderzeuge dies erfordert. Bei Einsatz im Freien, in Kühlhallen oder in staubiger Umgebung gehört eine geschlossene Fahrerkabine inklusive Frontscheibe zur üblichen Ausstattung eines Flurförderzeugs.

In bestimmten Einsatzfällen, beispielsweise in Gießereibetrieben, ist die Frontscheibe jedoch einem starken Verschleiß ausgesetzt. Bekannte Vorrichtungen zum Schutz der Frontscheibe vor Hitze, Metallspritzern, Metalldampf und Staub behindern häufig die Sicht des Fahrers durch die Frontscheibe oder haben eine kaum ausreichende Wirkung, wodurch ein häufiges Austauschen der Frontscheibe erforderlich wird.

Bei den bekannten Arten der Befestigung der Frontscheibe an der Fahrerkabine mittels Verschraubungen oder Kederverbindungen bedeutet das Austauschen der Frontscheibe einen erheblichen Material- und Arbeitsaufwand. Bei verschraubten Frontscheiben ist die neue Frontscheibe mit den entsprechenden Schraubenlöchern zu versehen, während die Befestigung der Frontscheibe mittels Kedern (speziell geformte Gummiprofile) einen erheblichen Arbeitsaufwand bedeutet.

Der vorliegenden Erfindung liegt daher die Aufgabe zugrunde, ein Flurförderzeug zur Verfügung zu stellen, bei dem ein schnelles Austauschen der Frontscheibe mit geringem Material- und Arbeitsaufwand möglich ist.

Diese Aufgabe wird erfindungsgemäß dadurch gelöst, daß die Fahrerkabine zwei Führungen aufweist, wobei zwei gegenüberliegende Kanten der Frontscheibe in den Führungen geführt sind. Die Führungen können beispielsweise als Führungsschienen ausgebildet sein. Die Frontscheibe kann längs der Führungen und damit relativ zur Fahrerkabine verschoben werden. Durch vollständiges Herausschieben der Frontscheibe aus den Führungsschienen wird die Frontscheibe entfernt. Analog hierzu ist ein Einschieben einer neuen Frontscheibe in umgekehrter Richtung möglich.

Besondere Vorteile ergeben sich, wenn die Frontscheibe aus Polycarbonat ausgeführt ist. Polycarbonat erweist sich z.B. für die Anwendung in Gießereibetrieben im Vergleich zu Glasscheiben als äußerst hitzebeständig und bruchsicher. Die Elastizität von Polycarbonat ermöglicht ein Biegen der aus diesem Material hergestellten Frontscheiben. Hierdurch kann die Frontscheibe in frontaler Richtung in die Führungen eingesetzt werden, wenn die Frontscheibe entsprechend gebogen wird. Anschließend federt die Frontscheibe wieder in ihre ursprüngliche Form zurück und ist dadurch in den Führungen festgelegt.

Ein einfaches Austauschen der Frontscheibe wird begünstigt, wenn die Führungen im wesentlichen waagrecht angeordnet sind, wobei eine Oberkante und eine Unterkante der Frontscheibe in den Führungen geführt sind. Das Gewicht der Frontscheibe wird somit von der unteren Führung aufgenommen, während die obere Führung die Frontscheibe vor Herausfallen sichert.

Zweckmäßig ist es, wenn an der Fahrerkabine mindestens ein Befestigungsmittel angeordnet ist, welches an einer Kante der Frontscheibe, die nicht in einer Führung geführt ist, angreift. Das Befestigungsmittel verhindert ein unbeabsichtigtes Verschieben sowie ein Wackeln oder Klappern der Frontscheibe in den Führungen. Das Befestigungsmittel kann hierzu beispielsweise als Niederhalterblech ausgeführt sein, das längs der Kante der Frontscheibe angeordnet ist.

Das Befestigungsmittel ist hierbei lösbar mit der Fahrerkabine verbunden, vorzugsweise verschraubt.

Wenn die Frontscheibe eben ausgeführt ist, kann diese besonders einfach und kostengünstig hergestellt werden. Beispielsweise ist es möglich, daß Frontscheiben von dem Anwender eines Flurförderzeugs aus plattenförmigem Polycarbonat selbst zugeschnitten werden.

Das Zuschneiden der Frontscheiben ist besonders einfach, wenn die Frontscheibe eine im wesentlichen rechteckige Form aufweist.

Weitere Vorteile und Einzelheiten der Erfindung werden anhand des in den schematischen Figuren dargestellten Ausführungsbeispiels näher erläutert. Dabei zeigt
Figur 1 eine Frontscheibe an einer Fahrerkabine in Frontansicht,
Figur 2 ein Detail der Ansicht gemäß Figur 1,
Figur 3 eine Frontscheibe an einer Fahrerkabine im Querschnitt.

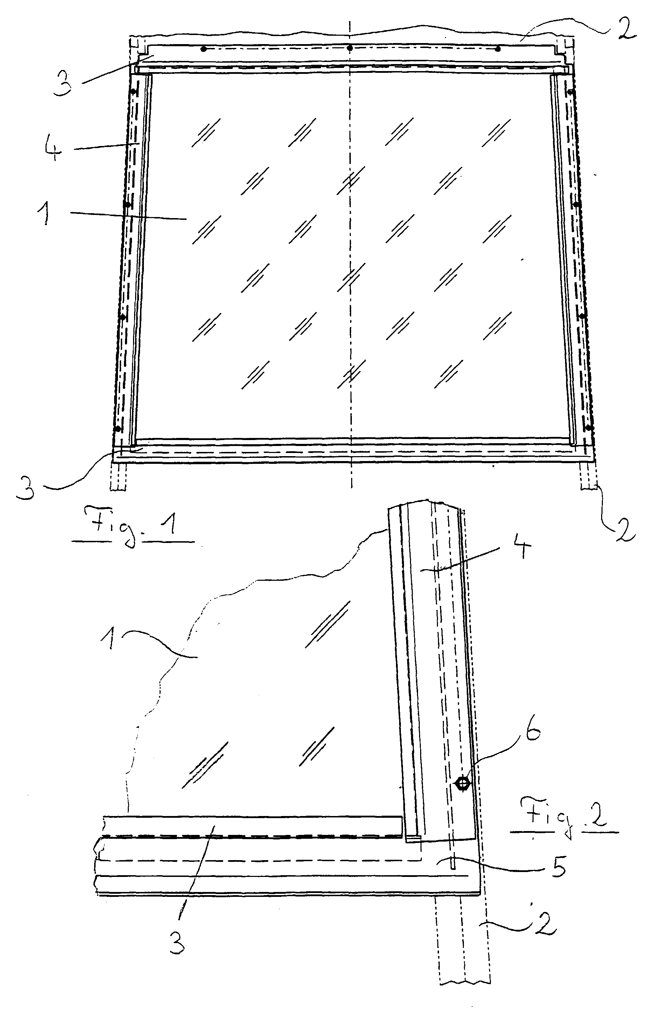

Figur 1 zeigt eine Frontscheibe 1, die an einer Fahrerkabine 2 eines Flurförderzeugs befestigt ist, in Frontansicht von außerhalb des Flurförderzeugs. Die Fahrerkabine 2 weist ein aus Metallprofilen hergestelltes Grundgerüst auf, an dem die verschiedenen Scheiben, Türen und Wände der Fahrerkabine befestigt sind.

Die Oberkante und die Unterkante der Frontscheibe 1 befinden sich in Führungen 3, die in diesem Ausführungsbeispiel als Führungsschienen ausgebildet und mit der Fahrerkabine 2 verschraubt sind. An den Seitenkanten der Frontscheibe 1 befinden sich als Niederhalterbleche ausgeführte Befestigungsmittel 4, die ebenfalls mit der Fahrerkabine 2 oder mit einem an der Fahrerkabine befestigten Bauteil verschraubt sind.

Figur 2 zeigt den rechten unteren Abschnitt der Fig. 1 in vergrößerter Darstellung. Zu erkennen ist insbesondere ein umlaufender Scheibenrahmen 5, auf den die Frontscheibe 1 aufgesetzt ist. Mit dem Scheibenrahmen 5 fest verbunden ist die Führung 3. Das Befestigungsmittel 4 hingegen ist an dem Scheibenrahmen 5 mittels Schrauben 6 lösbar befestigt. Um die Frontscheibe 1 austauschen zu können, muß mindestens ein Befestigungsmittel 4 entfernt werden.

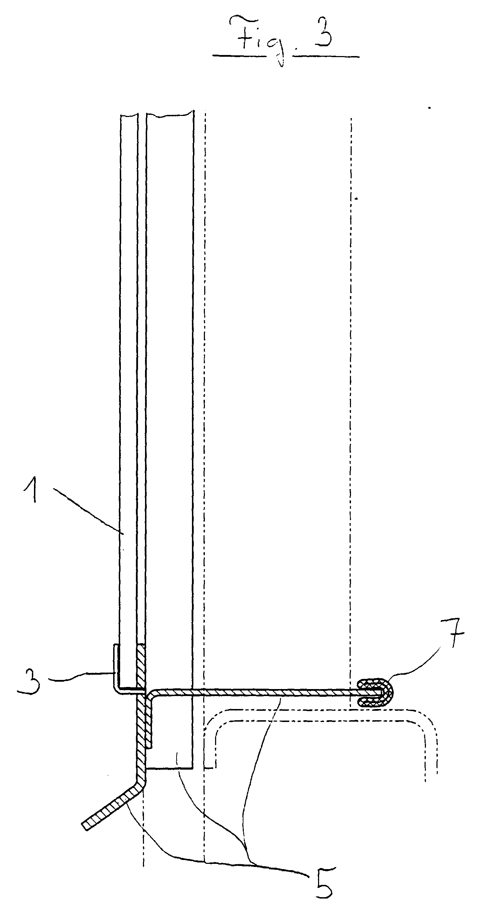

Figur 3 zeigt eine Frontscheibe 1 an der strichpunktiert dargestellten Fahrerkabine 2 in einem senkrechten Querschnitt. Der Scheibenrahmen 5 ist gegenüber der Fahrerkabine mittels eines Gummielements 7 abgedichtet. Zu erkennen ist ebenfalls die Führung 3, in welche die Frontscheibe 1 eingesetzt ist.

Ein Entfernen der Frontscheibe 1 erfolgt beispielsweise durch Verschieben der Frontscheibe längs der Führung 3. Ebenfalls möglich ist es, die Frontscheibe 1 zum Entfernen um eine in die Zeichenebene gerichtete Achse zu biegen, so daß die Frontscheibe 1 aus der Führung 3 springt. Das Einsetzen einer neuen Frontscheibe 1 ist jeweils analog in umgekehrter Weise möglich.

Die erfindungsgemäße Anordnung ermöglicht ein schnelles und kostengünstiges Austauschen der Frontscheibe des Flurförderzeugs, wobei keine besonderen Werkzeuge erforderlich sind. Die hierfür erforderlichen Arbeitsschritte können von den Bedienern des Flurförderzeugs selbst durchgeführt werden.

## Patentansprüche

1. Flurförderzeug mit einer Fahrerkabine und einer an der Fahrerkabine (2) befestigten Frontscheibe (1), **dadurch gekennzeichnet,** daß die Fahrerkabine (2) zwei Führungen (3) aufweist, wobei zwei gegenüberliegende Kanten der Frontscheibe (1) in den Führungen (3) geführt sind.

2. Flurförderzeug nach Anspruch 1, dadurch gekennzeichnet, daß die Frontscheibe (1) aus Polycarbonat ausgeführt ist.

3. Flurförderzeug nach Anspruch 1 oder 2, dadurch gekennzeichnet, daß die Führungen (3) im wesentlichen waagrecht angeordnet sind, wobei eine Oberkante und eine Unterkante der Frontscheibe (1) in den Führungen (3) geführt sind.

4. Flurförderzeug nach einem der Ansprüche 1 bis 3, dadurch gekennzeichnet, daß an der Fahrerkabine (2) mindestens ein Befestigungsmittel (4) angeordnet ist, welches an einer Kante der Frontscheibe (1), die nicht in einer Führung (3) geführt ist, angreift.

5. Flurförderzeug nach Anspruch 4, dadurch gekennzeichnet, daß das Befestigungsmittel (4) lösbar mit der Fahrerkabine (2) verbunden, vorzugsweise verschraubt ist.

6. Flurförderzeug nach einem der Ansprüche 1 bis 5, dadurch gekennzeichnet, daß die Frontscheibe (1) eben ausgeführt ist.

7. Flurförderzeug nach einem der Ansprüche 1 bis 6, dadurch gekennzeichnet, daß die Frontscheibe (1) eine im wesentlichen rechteckige Form aufweist.
